# EUROPEAN PATENT APPLICATION

(11) **EP 4 349 778 A1**
(43) Date of publication of application: **10.04.2024**
(21) Application number: 22382919.3
(22) Date of filing: 03.10.2022
(51) Int. Cl.: C01B 33/143, B29C 64/112, B33Y 70/10, C09D 11/101

(54) **INK FOR 3D PRINTING**

(71) Applicant: Universitat Internacional De Catalunya, Fundació Privada, 08017 Barcelona (ES)
(72) Inventor: PÉREZ ANTOÑANZAS, Román, 08195 Sant Cugat del Valles (ES); DELGADO GAROÑA, Luis María, 08195 Sant Cugat del Vallès (ES); RODRÍGUEZ GONZÁLEZ, Raquel, 08195 Sant Cugat del Vallès (ES)
(74) Representative: Torner, Juncosa I Associats, SL

(57) **Abstract**

The present invention relates to a sol gel ink composition for 3D printing consisting of a mixture of a metal alkoxide, preferably an organic silicate, mixed with water, wherein the molar ratio between water and the organic silicate is between 4 and 12. The present invention also relates to a method to obtain an ink composition for 3D printing comprising the following steps: i) mixing an organic silicate with water at an acidic pH and stirring to obtain a sol; ii) submitting the sol to a gelling reaction comprising raising the sol temperature to a temperature of between 35 and 65°C; wherein the molar ratio between water and the organic silicate is between 4 and 12. The present invention also relates to a 3D printing system, to a method of printing a 3D articles comprising selectively depositing layers of an ink and to a printed article obtained from the ink composition.

## Description

### TECHNICAL FIELD

The present invention relates to an ink for 3D printing, to a method to obtain the ink, a 3D printing system comprising the ink and a method to print a 3D article.

### BACKGROUND OF THE INVENTION

Silica based materials have been commonly studied in the field of bone tissue regeneration, due to their bioactivity and osteogenic properties. Nowadays, bone tissue engineering is focused on the development of 3D printed materials, which allows to produce custom-made scaffolds with a desired porosity, shape and size.

3D printing includes various processes to make 3D objects. Computer control is used to lay successive material layers, using a 3D model or other electronic data source to make resulting 3D objects with any shape or geometry.

Originally, the term 3D printing referred to processes that sequentially deposited layers of material onto a powder bed with inkjet printer heads. More recently, however, the definition of 3D printing has expanded to encompass a wider variety of techniques, such as extrusion and sintering-based processes.

The 3D printing of silica-based materials normally uses very high temperatures to sinter the printed scaffold to obtain the desired final structure. In some cases, silica particles are mixed with organic compounds that act as binder to print the structure, needing a high temperature post-processing step in order to remove the binder and sinter the silica particles together, obtaining a silica scaffold (see, for example, BARBERI, J. et al. "Robocasting of SiO2-based bioactive glass scaffolds with porosity gradient for bone regeneration and potential load-bearing applications" Materials, 12(17), p. 2691 (2019)). In other cases, selective laser sintering is used to sinter silica particles together without the need of a binder, using a sintering temperature to obtain a dense glass (see, for example, LIU, F.H "Synthesis of biomedical composite scaffolds by laser sintering: Mechanical properties and in vitro bioactivity evaluation" Applied Surface Science, 297, p. 1-8 (2014)). Another commonly used approach to print silica-based materials is the use of preceramic polymers, that require a pyrolytic treatment to be converted into ceramics, also removing the organic part of the polymer, obtaining a silica scaffold (see, for example, ZOCCA, A. et al. "SiOC ceramics with ordered porosity by 3D-printing of a preceramic polymer" Journal of Materials Research, 28 (17), p. 2243-2252 (2013)).

These high temperature treatments are harsh and significantly reduce the specific surface and porosity of the scaffolds, and they limit the biological activity and encapsulation of bioactive molecules within the scaffold.

An approach to obtain silica-based materials at low temperature is the sol-gel reaction, in which a silica network is created from silica precursors. This reaction involves the transformation of a liquid sol to a hard gel, using chemicals, pH or temperature as catalyst (see, for example, VALLET-REGI, M. et SALINAS, A.J. "Sol-gel silica-based biomaterials and bone tissue regeneration" In: Klein, L., Aparicio, M., Jitianu, A. (eds) Handbook of Sol-Gel Science and Technology. Springer, Cham (2018), 6, p. 3597-3618). Current methods to print silica using the sol-gel technique have some limitations, such as the combination of silica precursor with polymer, forming hybrid materials and eventually having a higher proportion of polymer than silica, or the need of photocurable polymers to obtain the scaffolds (see, for example, SHUKRUN, E. et al. "3D-printed organic-ceramic hybrid structures with high silica content" Advanced Science, 5(8), 1800061 (2018)).

WO2017029673A1 discloses formulations and processes for manufacturing 3D objects, the formulations being free of particulate materials and used in low temperature 3D printing processes. Specifically, this application discloses a formulation for 3D printing in the form of a solution comprising a plurality of polymerizable ceramic precursors and at least one photoinitiator, the formulation being free of particulate materials.

WO2019178599A1 discloses systems, methods and compositions for inkjet printing of ceramic dielectric portions. Specifically, this application relates to systems, methods and compositions for the inkjet printing of three-dimensional patterns formed from pre-ceramic polymer derived from interpenetrated networks that are comprised of at least two phases, or bi-continuous phases, one formed by free radical polymerization and the other by sol-gel polymerization. The method requires pyrolysis of the pre-ceramic pattern to form a 3D pattern.

WO2020044234A1 relates to a filamentary structure manufactured during 3D printing by liquid deposition modelling, the filamentary structure comprising a continuous strand comprising a matrix material, that may be a sol-gel system, and filler particles, wherein the filler particles comprise hexagonal boron nitride particles.

### SUMMARY OF THE INVENTION

In order to address one or more of the foregoing problems, one aspect of the present invention relates to an ink suitable for 3D printing that is a sol gel and consists of a mixture of a metal alkoxide, preferably an organic silicate, mixed with water. The molar ratio between water and the organic silicate is preferably between 4 and 12.

In a second aspect, the present invention discloses a method to obtain an ink composition for 3D printing comprising the following steps: i) mixing an organic silicate with water at an acidic pH and stirring the mixture to obtain a sol; ii) submitting the sol to a gelling reaction comprising raising the sol temperature to a temperature of between 35 and 65°C; wherein the molar ratio between water and the organic silicate in step i) is preferably between 4 and 12.

In a third aspect, the present invention discloses a 3D printing system comprising a three-dimensional printer having at least one of an ink dispenser and an ink reservoir; an ink loaded within the ink dispenser, the ink reservoir, or both, wherein the ink comprises the ink composition as defined in this application.

In a fourth aspect, the present invention discloses a method of printing a 3D article that involves selectively depositing layers of an ink in a fluid state onto a substrate, wherein the ink comprises the ink composition as defined in this application.

In a fifth aspect, the present invention discloses a printed article obtained from the ink composition as defined in the present invention or from the ink composition obtained according to the method to obtain an ink composition as defined in this application.

### BRIEF DESCRIPTION OF THE DRAWINGS

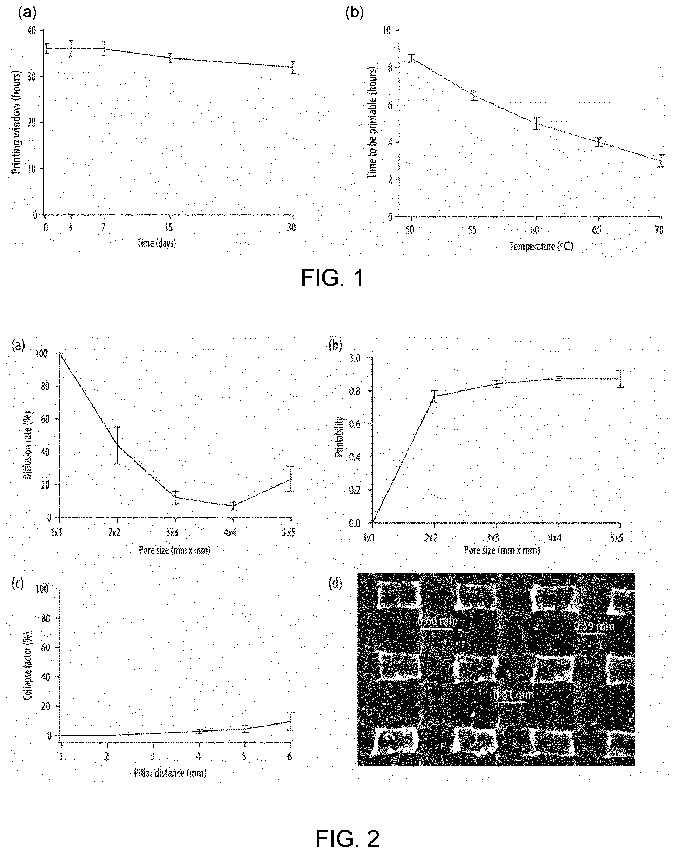

FIG. 1a shows the printing window at different days after storing at -4°C a gel prepared at 60°C, while FIG. 1b shows the time at the silica-based gel takes to be able to be printed at different temperatures.
FIG. 2 depicts the shape fidelity of the ink according to the invention assessed by diffusion rate (FIG. 2a), printability (FIG. 2b) and collapse factor (FIG. 2c). FIG. 2d is a SEM image of the printed ink pores.

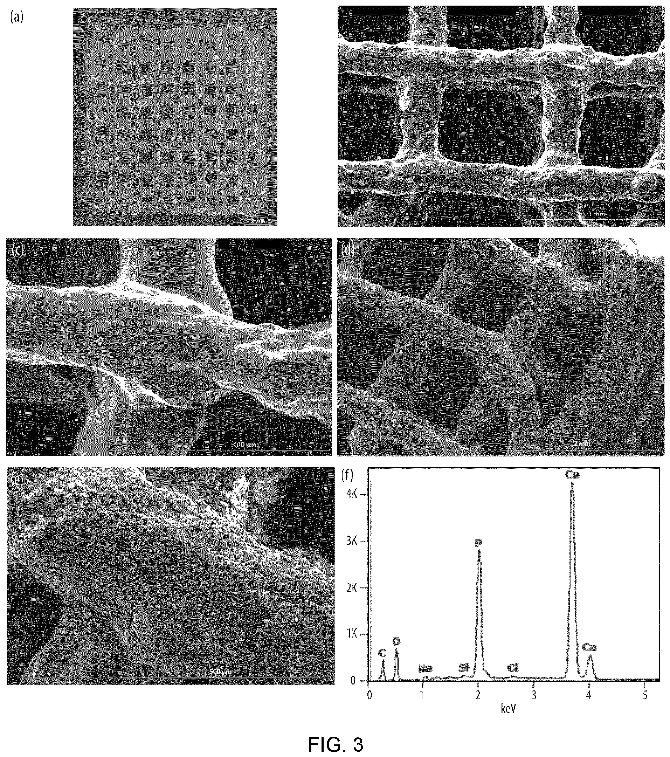

FIG. 3 depicts the scaffold morphology before and after in vitro testing showing the apatite forming ability of the silica 3D-printed scaffolds by SBF immersion for 7 days at 37°C. FIG. 3a shows a 3D printed 15x15x3 mm scaffold, using 22% volumetric density, a flow rate of 2.5 µl/s and a speed of 8 mm/s before simulated body fluid (SBF) immersion. FIG. 3b is a Scanning Electron Microscopy (SEM) image showing the structure of the scaffold before SBF immersion.
FIG. 3c is a close-range image of a strut showing the surface morphology of the scaffold before SBF immersion. FIG. 3d is a SEM image showing the apatite is deposited uniformly along the whole scaffold and its different layers. FIG. 3e is a close-range image of a strut showing uniform crystallization of the apatite. FIG. 3f shows the Energy-dispersive X-ray spectroscopy (X-EDS) analysis of the deposited apatite confirming the presence of calcium and phosphate.

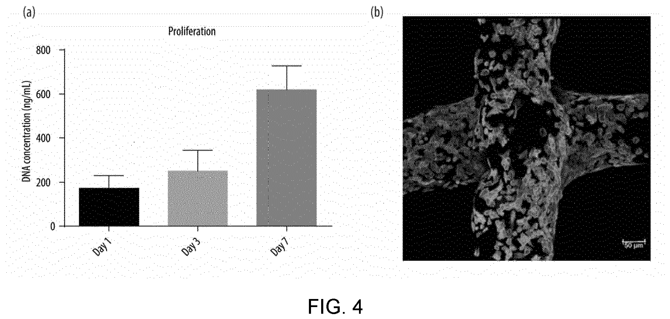

FIG. 4a shows cell proliferation on the silica 3D-printed scaffolds at different time points, measured using the PicoGreen assay, while FIG. 4b is an immunofluorescence image after 7 days of cell culture on silica 3D-printed scaffolds. Phalloidin and DAPI are depicted in light grey and dark grey, respectively.

### DETAILED DESCRIPTION OF THE INVENTION

As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

As used herein, the terms "consists of", "consisting of", or any other variation thereof, are intended to cover an exclusive inclusion. For example, a composition, a mixture, process, method, article, or apparatus that consists of a list of elements is necessarily limited to only those elements.

As used herein, the articles "a" and "an" preceding an element or component are intended to be nonrestrictive regarding the number of instances (i.e., occurrences) of the element or component. Therefore, "a" or "an" should be read to include one or at least one, and the singular word form of the element or component also includes the plural unless the number is obviously meant to be singular.

As used herein, the terms "invention" or "present invention" are non-limiting terms and not intended to refer to any single aspect of the particular invention but encompass all possible aspects as described in the description and the claims.

As used herein, the terms "percent by weight," "% by weight," and "wt.%" mean the weight of a pure substance divided by the total dry weight of a compound or composition, multiplied by 100.

As used herein, the term "scaffold" means a 3D object or 3D article that causes desirable cellular interactions to contribute to the formation of new functional tissues for medical purposes. Therefore, the specific term scaffold in the present invention is comprised in the broader category of 3D article or 3D object.

As described hereinabove, the present invention relates to an ink suitable for 3D printing that is a sol gel and consists of a mixture of a metal alkoxide, preferably an organic silicate, mixed with water. The molar ratio between water and the organic silicate is preferably between 4 and 12, more preferably between 7 and 9, even more preferably 8.

An organic silicate is to be understood as a silicon-based compound in which at least one alcoxi group is bound to a silicon atom.

The organic silicate according to the invention is preferably selected from the group comprising tetraethylorthosilicate (CAS number 78-10-4), tetramethylorthosilicate (CAS number 681-84-5), glycydoxypropyltrimethoxysilane (CAS number 2530-83-8) and combinations thereof. More preferably, the organic silicate according to the invention is tetraethylorthosilicate.

The present invention also discloses a method to obtain an ink composition for 3D printing comprising the following steps: i) mixing an organic silicate with water at an acidic pH and stirring the mixture to obtain a sol; ii) submitting the sol to a gelling reaction comprising raising the sol temperature to a temperature of between 35 and 65°C; wherein the molar ratio between water and the organic silicate in step i) is preferably between 4 and 12.

In the method to obtain an ink composition for 3D printing, the organic silicate is preferably selected from the group comprising tetraethylorthosilicate, tetramethylorthosilicate, glycydoxypropyltrimethoxysilane and combinations thereof. More preferably, the organic silicate according to the invention is tetraethylorthosilicate.

In the mixing step, the stirring is preferably performed at between 5 and 40 g, more preferably at between 10 and 30 g, even more preferably between 15 and 25 g.

Temperature plays an important role in the gelling reaction. The higher the temperature is, the faster the gelling reaction takes place. As described below, the inventors found that approximately each 5°C difference amount to an hour of gelling time. Temperatures above 65°C lead to the formation of bubbles in the sol, precluding homogenous gelling. Therefore, the gelling reaction is preferably performed at a temperature of between 35 and 65°C, more preferably between 45 and 65 °C, even more preferably between 50 and 65°C, yet more preferably at 60°C.

A defined molar ratio between water and the organic silicate are essential to obtain an ink that in the form of a sol gel suitable for 3D printing.

The gelling reaction may be performed in a heating system that allows temperature control, preferably in a water bath, but other alternatives to controlling the temperature of the gelling reaction may be envisaged.

The present invention further discloses a 3D printing system comprising a three-dimensional printer having at least one of an ink dispenser and an ink reservoir; an ink loaded within the ink dispenser, the ink reservoir, or both, wherein the ink comprises the ink composition as defined in this application.

Moreover, a method of printing a 3D article is herein disclosed. The method comprises selectively depositing layers of an ink in a fluid state onto a substrate, wherein the ink comprises the ink composition as defined in this application.

Preferably, the method of printing a 3D article comprises extruding the ink through a nozzle of 0.3 to 0.7 mm diameter at an extrusion rate of between 0.5 and 5 µl/s when depositing the ink onto the substrate. More preferably, the nozzle is between 0.4 and 0.6 mm diameter. More preferably, the extrusion rate is between 1.5 and 3 µl/s.

The method of printing a 3D article may also involve a layer height preferably between 0.1 and 10 mm, more preferably between 0.2 and 0.5 mm; a retract volume of preferably 2 to 50 µL, more preferably 5 to 25 µL, and a printing (or deposition) speed of between 2 to 15 mm/s, preferably between 6 to 10 mm/s.

In the method of printing a 3D article according to the present invention, the layers of the ink may be deposited according to an image of the 3D article in a computer readable format.

A curing step of the 3D article following printing may be envisaged. A preferred method of curing is a thermal treatment.

Preferably, thermally curing the formed 3D article may involve submitting the formed 3D article to two steps: a first one at 37°C for at least 2 days or at room temperature for at least 3 days inside a hermetic box and, subsequently, a second step of submitting the 3D article for at least 24 hours at least room temperature or even higher (but advantageously lower than 40°C) in an aeration, ventilation or vacuum system. Drying temperature around 60°C induces scaffold rupture due to internal tensions.

In the first of the above-mentioned thermally curing stage, the condensation reaction ends and a dealcoholation phenomenon occurs. This first stage is especially relevant to obtain a resistant and robust material. In the subsequent stage, the formed 3D article is dried and water and alcohols are evaporated -byproducts of the sol-gel reaction. Evaporating alcohol is especially relevant to avoid toxicity of the material formed.

Room temperature is understood in the art as approximately 20°C.

A hermetic box, or a hermetic container, relates to a container that is airtight, ensuring perfect waterproofing.

An aeration system refers to a system that involves circulation of air through a substance, in the present application through the formed 3D article. An aeration system might be a source of air or nitrogen directed towards the formed 3D article.

A ventilation system refers to a system enabling the movement of fresh air in a closed space around the formed 3D article. A ventilation system might be a fume hood.

The present invention also discloses a printed article obtained from the ink as defined herein or from the ink composition obtained according to the method defined herein. The density of the resulting printed article or scaffold ranges from 5 to 40%.

In another aspect, the present invention also discloses the use of the article defined herein manufactured according to the process defined herein, as a scaffold for growth of biological cells.

Furthermore, the present invention discloses the use of the article defined herein or manufactured according to the process of the invention defined herein, for a medical device, such as a biomedical implant, an orthopedic device, an artificial bone structure or a stem-cell scaffold.

The ink for 3D printing and the method to obtain such ink defined in the present invention have several advantages over the prior art.

Specifically, the ink can be stored for long times without losing the features associated to silica-based materials in general, and silica-based inks for 3D printing, in particular.

The ink according to the present invention has an improved shelf-life, i.e., it can be stored for a long time without losing its printability.

Moreover, the ink allows the production of 3D articles having an adequate porosity, bioactivity and biocompatibility.

Further advantages associated with the technical features of the present invention are disclosed in the following section of Examples.

### EXAMPLES

### Example 1: Ink development and printing window

As the reagents for the silica based ink, tetraethyl orthosilicate (TEOS, Sigma-Aldrich) and hydrochloric acid (HCI; 37%, Honeywell) were used. Briefly, 10 mL of TEOS were mixed with 0.1 M HCI, keeping a H₂O/TEOS molar ratio of 8, and stirred at 27 g in a commercial centrifuge apparatus until the hydrolysis process was finished and the sol was prepared. In order to initiate the gelation reaction, temperature was used as a catalyst.

To study the gelling time, five different temperatures were used: 50, 55, 60, 65 and 70°C. The sols were introduced in a water bath at the corresponding temperature while stirring. The sols were placed into in 3 mL syringes to continue the reaction before they started gelling. The gel was considered printable when it could be extruded through a 0.58 mm nozzle from a syringe without breaking the strut and being able to stack more than one layer without collapsing. The times for each gel to become printable were estimated in triplicates.

The different times that the sols needed to become printable were recorded and shown in FIG. 1b.

As the temperature increased, the gelling time became shorter, reaching as low as 2.5 hours when using 70°C. For a temperature of 50°C, the time to reach printability was close to 8.5 hours. Each 5°C difference changed approximately an hour of gelling time. Moreover, temperatures above 65°C created small bubbles in the sol, making the gelling less homogenous than in the lower temperature cases.

To determine the printing window, the preparation of the ink was the same as explained above but experiments were performed only at a gelling temperature of 60°C. Once prepared, the gel was left at room temperature and the printability was checked, considering the ink no longer printable when the gel broke as it was extruded. To estimate the shelf-life, the length of time that the ink can be stored without losing its printability, the printing window was also measured for the gel kept in the freezer at -20°C for 3, 7, 15 and 30 days.

The printing window was estimated immediately after gelling, and after 3, 7, 15 and 30 days at -20°C. The results are summarized in FIG. 1a. The gel right after being prepared lasted an average of 36 hours since it started being printable until it was too gelled to be printed. The storage of the gel at -20°C slowed down the reaction to the point that the gels still had a printing window of 28 hours after 30 days. This would reduce possible batch differences, as the long storage times avoids having to prepare the ink every time an object needs to be printed.

### Example 2: 3D printing of scaffolds

The printable ink was prepared as previously described, at a temperature of 60°C. The inks were printed on a Cellink BioX printer, using a mechanical extruder. The used parameters were a nozzle of 0.58 mm, 2.50 µL/s as the extrusion rate, the layer height was set at 0.48 mm, 10 µL as a retract volume and at a speed of 7 mm/s. Different sizes and shapes were printed as will be further explained below.

Once the scaffolds were printed, they were aged for 2 days at 37°C inside of a hermetic box to finish the sol-gel reaction, and then dried at room temperature for at least 24 hours.

### Example 3: Shape fidelity and contraction

In order to assess the shape fidelity of the ink, three different tests were performed: diffusion rate (Dfr), printability (Pr) and material collapse (C). Moreover, the printed strut width was compared with the theoretical width. The shape fidelity was thereby assessed by studying four different parameters, the diffusion rate, the printability, the collapse factor and the struth width.

In all of these cases, a printing speed of 7 mm/s was used as well as a 2.50 µl/s extrusion rate and a nozzle size of 0.58 mm.

Moreover, the contraction of the material after drying was also studied. For this, scaffolds of 15x15x3 mm³ were 3D printed, with a volumetric density of 15-40%. Then, the scaffolds were aged and dried as previously described, and the dimensions of the scaffold were measured to estimate the contraction of the material. Assays were done in triplicates.

The results for the collapse and fusion and printability tests are summarized in FIG. 2. For the diffusion rate, the higher it is, the more ink diffusion takes place, which lowers the shape fidelity. The smallest pore (1x1 mm) could not be printed, meaning a diffusion rate of 100%. As the pore area increased, the diffusion rate dropped, with the exception of the 5x5 mm pore, which showed an unexpected increase of the diffusion rate. This is due to the position of the pore, as the corner of the printed structure is not as accurately printed as in the center, causing a rounded corner and, therefore, decreasing the pore size (FIG. 2a).

The printability is a measure that estimates how close to a square are the printed pores. If it is equal to 1, it means it is a perfect square, whereas lower values mean the shape is getting closer to a circle. FIG. 2b shows that all of the printed pores had values close to 0.8, being a bit lower again for the smallest pore and the corner pore. This means that the shape of the pores is very close to the model, but without being a perfect square.

For the collapse test, a bigger collapse factor means a lower ability to bridge the gap at the measured distance, but in the present case there was no significant collapse for any gap lengths, being negligible for the smaller ones and only reaching a 10% in the case of the biggest gap length.

Therefore, to have a good shape fidelity, pores need to have at least a size of 9 mm², considering that the pores in the corner will always be less accurate than the middle ones.

The strut width was measured using a stereomicroscope (SteREO Discovery v8, Carl-Zeiss). Ten different struts were measured in different parts of three scaffolds in order to obtain an accurate average width. In this case the average was 0.62 ± 0.04, compared to the theoretical 0.58 mm given the size of the used nozzle, which is also an important factor to consider when designing a scaffold.

Other ceramic based inks have not been analyzed when it comes to printing shape fidelity, but the inventors consider the above data an important issue when characterizing any printable material, as the accuracy of the printing will limit the ability to fill a specific defect, have a specific geometry, which will also control the bone regeneration process.

This shape fidelity data will also be important when designing a custom-made scaffold, as the differences between the model and the printed structure can be estimated and included in the design. However, another aspect that has to be considered at the time of design is the contraction of the material, which is crucial to obtain the final desired shape and size. The contraction was measured after drying the scaffold, and it was measured in two different axes, x-y and z. In both cases the contraction is higher than 50%, being 62.5 ± 2.2% for the x-y axis, and 61.4 ± 1.0% for the z axis. Most pure silica materials that are produced through sintering have a lower contraction, the majority of them being around 20-25%, with some exceptions that show a higher contraction closer to the proposed material. However, the contraction in the material according to the invention seemed to be equal in all directions, without producing any deformation or breakage of the initial shape, as shown in FIG. 3a. Therefore, contraction is not considered to be a substantial problem, considering the rest of the advantages of the sol-gel silica scaffolds as in the present invention.

Considering the parameters above, a scaffold can be designed keeping into account what the minimum pore sizes and gaps should be to avoid big disparities as well as post drying contraction.

### Example 4: Mesopore distribution and surface area

Because of the sol-gel reaction, printed scaffolds possess a high level of mesoporosity. In order to study the mesopores and surface area of the material, three scaffolds of 15x15x3 mm³ and a 25% density were printed, aged and dried, and then were crushed into small pieces. The pore size, specific surface area and pore volume were calculated by N₂ gas adsorption/desorption, using the Brunauer-Emmett-Teller (BET) method measured by using Micromeritics ASAP 2020 adsorption analyzer. Before the adsorption measurements, all samples were degassed for 10 h at 150°C. Pore size distribution was obtained by the Barret-Joner-Halenda (BJH) method and the total pore volume was calculated from the amount adsorbed at a maximum relative pressure (P/P0).

The pore size of the printed scaffold was of 1.66 nm, with a surface area pf 569.5 m²/g and a pore volume of 0.24 cm²/g. This pore size might be useful for the encapsulation or adsorption of small molecules, such as ibuprofen with an average size of 1 nm. In the case of molecule adsorption, molecules with sizes above 1.66 nm would not be able to enter the pore, staying only on the outer part of the scaffold, therefore not being suitable for drug delivery.

Other sol-gel silica materials, such as silica microspheres show a pore size distribution, surface area and pore volume relatively higher than the ink according to the present invention, proving that the use of temperature as a catalyst and 3D printing slightly decreased the pore formation, which could be due to a change in the speed of the reaction.

### Example 5: Bioactivity

The bioactivity was evaluated through the formation of apatite on the surface of the silica material obtained from the ink according to the invention when immersed in a simulated body fluid (SBF) solution, which was prepared following the experimental protocol disclosed in KOKUBO, T. et TAKADAMA, H. "How Useful Is SBF in Predicting in Vivo Bone Bioactivity?" Biomaterials, 27 (15), p. 2907-2915 (2006). Briefly, bioactivity was studied using 3D printed, aged and dried scaffolds of 2.5x5x1 mm³. The scaffolds were sterilized with UV light, and then incubated with 15 mL of SBF each. After immersion for 3, 7, 14 and 21 days, the scaffolds were washed with distilled water three times, and dried in a vacuum chamber. The formation of apatite on the surface of the material was analyzed with a scanning electron microscopy (SEM) (JEOL JSM 5410) operated at 10 kV. Prior to microscopy analysis, the samples were coated with a gold layer using an Agar sputter coater (AGB7340).

On FIG. 3b, the SEM image of a 3D printed scaffold before SBF immersion can be seen, and FIG. 3c-d shows the SEM image of the scaffold after immersion in SBF for 7 days. Even though the bioactivity was assessed up to 21 days, an apatite layer can be seen after 7 days, covering most of the scaffold. The apatite was uniformly crystallized (FIG. 3e). Moreover, X-EDS was performed on the potential apatite, confirming the presence of calcium and phosphate ions (FIG. 3f). Previous studies with sol-gel silica-based materials also showed a similar deposition time, therefore showing no change in the bioactivity of the material after the temperature treatment and 3D printing.

### Example 6: In vitro cell culture

In order to analyze the ability of cells to adhere and proliferate on the scaffolds, SAOS-2 cells were cultured within the scaffold. The cells were maintained in McCoy's 5A modified medium (Gibco), containing 10% fetal bovine serum (FBS)(Sigma), 1% penicillin-streptomycin (Gibco) and 1% sodium pyruvate solution (Gibco) in a humidified atmosphere with 5% CO₂ in air.

Scaffolds of 13x13x3 mm³ were prepared as previously described and sterilized through UV light for 30 minutes. The cells were then detached using Trypsin EDTA (Gibco) seeded on top of the scaffold, using 150.000 cells per scaffold. After 1, 3 and 7 days, the scaffolds were moved into a new plate and washed 3 times with PBS. The cells were then lysed by adding 1 mL of cold 0.1% Triton-X100 in TE buffer and leaving it for 10 minutes on a microplate shaker. The scaffolds were then removed from the wells and the lysis buffer was kept at -80°C until use. The number of cells were estimated using a Pico Green assay kit (Invitrogen).

The cells were also observed after 7 days on the scaffolds using confocal laser scanning microscope (CLSM, Leica Mycrosystems TCS SP8). To prepare the cells, the scaffolds were washed 3 times with PBS, after which they were fixed using 4% paraformaldehyde (PFA) for 40 minutes. After that time, the scaffolds were washed with PBS 3 times. The cytoskeleton was stained with Acti-stain 488 phalloidin (Cytoskeleton, Inc.) and the nuclei of the cells were stained using DAPI ready-made solution (Sigma-Aldrich). The phalloidin stock was diluted to 7 µL per mL of PBS and the scaffolds were incubated for 40 minutes with 1 mL of the solution. After that, the scaffolds were washed 3 times with PBS. The DAPI stock solution was diluted 1:1000 and incubated with the scaffolds for 30 seconds and finally washed 3 times with PBS. The stained scaffolds were observed in the confocal microscope using the Alexa 488 and DAPI filters and a z-stack was carried out to properly see the cell distribution.

The cell culture performed with SAOS-2 cells showed a proper proliferation of the cells seeded on the scaffold, slightly increasing in number after 3 days, and triplicating in number after 7 days, as seen in Figure 4a. The immunofluorescence assay demonstrates that cells spread and maintained the polygonal shape after 7 days, covering most of the struts of the scaffolds.

## Claims

1. A sol gel ink composition for 3D printing consisting of a mixture of an organic silicate mixed with water, wherein the molar ratio between water and the organic silicate is between 4 and 12.

2. The ink composition according to claim 1, wherein the organic silicate is tetraethylorthosilicate, tetramethylorthosilicate or glycydoxypropyltrimethoxysilane.

3. The ink composition according to claim 1 or 2, wherein the molar ratio is between 7 and 9.

4. A method to obtain an ink composition for 3D printing comprising the following steps:
i) mixing an organic silicate with water at an acidic pH and stirring the mixture to obtain a sol;
ii) submitting the sol to a gelling reaction comprising raising the sol temperature to a temperature of between 35 and 65°C;
wherein the molar ratio between water and the organic silicate in step i) is between 4 and 12.

5. The method according to claim 4, wherein the organic silicate is tetraethylorthosilicate, tetramethylorthosilicate or glycydoxypropyltrimethoxysilane.

6. The method according to claim 4 or 5, wherein stirring is performed at between 5 and 40 g.

7. The method according to claims 4 to 6, wherein the sol temperature is raised to a temperature of between 45 and 65°C, more preferably to 60°C during the gelling reaction.

8. A 3D printing system comprising:
a three-dimensional printer having at least one of an ink dispenser and an ink reservoir;
an ink loaded within the ink dispenser, the ink reservoir, or both, wherein the ink comprises the ink composition of any one of claims 1 to 3.

9. A method of printing a 3D article comprising:
selectively depositing layers of an ink in a fluid state onto a substrate, preferably according to an image of the 3D article in a computer readable format, wherein the ink comprises the ink composition of any one of claims 1 to 3.

10. The method according to claim 9, further comprising extruding the ink through a nozzle of 0.3 to 0.7 mm diameter at an extrusion rate of between 0.5 and 5 µl/s when depositing the ink onto the substrate.

11. The method according to claim 9 or 10, further comprising thermally curing the formed 3D article following printing.

12. The method according to claim 11, wherein thermally curing involves submitting the formed 3D article for at least 2 days to at least 37°C inside a hermetic box and, subsequently, submitting the 3D article for at least 24 hours to at least room temperature in an aeration, ventilation or controlled vacuum system.

13. A printed article obtained from the ink composition of any one of claims 1 to 3 or from the ink composition obtained according to any one of claims 4 to 8.

14. Use of the article according to claim 13 or manufactured according to any of claims 9 to 12, as a scaffold for growth of biological cells.

15. Use of the article according to claim 13 or manufactured according to any one of claims 9 to 12, for a medical device, such as a biomedical implant, an orthopedic device, an artificial bone structure or a stem-cell scaffold.
